# FASCICULE DE BREVET EUROPEEN

(11) **EP 0 418 130 B1**
(45) Date de publication et mention de la délivrance du brevet: **17.11.1994**
(21) Numéro de dépôt: 90402471.8
(22) Date de dépôt: 07.09.1990
(51) Int. Cl.: H04L 1/24, H04L 1/00

(54) **Equipements de contrôle de qualité pour liaisons de transmission numériques**
Qualitätsüberwachungsvorrichtung für digitale Übertragungskanäle
Quality monitoring equipment for digital transmission links

(30) Priorité: 08.09.1989 FR 8911778
(43) Date de publication de la demande: 20.03.1991
(73) Titulaire: FRANCE TELECOM, 75015 Paris (FR)
(72) Inventeur: Bonnifait, Michel, F-22300 Lannion (FR); Garandel, René, F-22670 Pleumeur Bodou (FR); Tremel, Jean-Yves, F-22670 Pleumeur Bodou (FR)
(74) Mandataire: Martinet & Lapoux

(56) Documents cités:
- EP-A- 0 093 648
- EP-A- 0 327 747
- WO-A-88/09590

## Description

La présente invention concerne de manière générale le contrôle de qualité d'une liaison de transmission numérique en présence de trafic réel. Plus particulièrement, l'invention concerne des équipements de contrôle de qualité respectant les recommandations du CCITT en la matière, indiquant les erreurs de transmission au niveau du bit et dans lesquels la détection des erreurs fait appel de préférence à un codage à redondance cyclique (CRC).

La mise en place progressive des réseaux numériques de télécommunications à intégration de services (NUMERIS) et l'avènement des services numériques associés laissent prévoir pour les prochaines années un accroissement des exigences de qualité de la part des utilisateurs. Le tout numérique autorise théoriquement des mesures quantitatives précises de la qualité des transmissions et il est souhaitable de faire disparaître tout critère de qualité de type subjectif aussi bien dans le cas de la transmission de données que de la transmission de parole.

Le CCITT dans la recommandation G-821 a défini des paramètres de qualité pour des sections, liaisons et conduits numériques au travers d'un réseau avec ou sans commutateurs. La mesure de ces paramètres de qualité nécessite actuellement la mise hors service provisoire de la liaison concernée et l'injection dans la liaison d'une séquence numérique pseudo-aléatoire dont la composition est connue à l'avance. Une comparaison entre la séquence transmise et la séquence reçue autorise une détection rigoureuse au niveau du bit des erreurs de transmission et les paramètres de qualité selon le CCITT sont ensuite calculés.

Dans l'état de la technique, il n'y a pas d'équipement disponible pour mesurer les paramètres de qualité du CCITT sur une liaison en présence de trafic réel. Par ailleurs, les erreurs détectées par l'utilisation de codes à redondance cyclique portent généralement sur un ensemble de voies convoyées par la liaison contrôlée et ces erreurs ne sont pas attribuables spécifiquement auxdites voies.

La demande de brevet européen EP-A-0 327 747 décrit des procédé et appareil de contrôle de qualité d'une liaison de transmission numérique. Selon cette demande, deux stations de contrôle respectivement connectées à des première et seconde extrémités de la liaison calculent des informations de contrôle, telles que code de redondance cyclique, relatives respectivement aux trames transmises à la première extrémité et reçues à la seconde extrémité. Une liaison de service reliant les deux stations et distincte de la liaison à contrôler, est utilisée pour transmettre les informations de contrôle calculées par la seconde station vers la première station. A partir de comparaisons entre informations de contrôle respectivement calculées par les deux stations sont déduites des informations statistiques des erreurs de transmission. Cette demande de brevet ne prévoit pas une analyse plus fine, au niveau des trames, des erreurs de transmission par exemple par le calcul de la fréquence des erreurs bit dans une trame.

L'invention vise à remédier aux inconvénients précités en fournissant un équipement destiné à contrôler la qualité d'une ligne de transmission en établissant des mesures statistiques d'erreurs dans une trame en vue de déduire des niveaux de qualité de la liaison tels qu'exprimés par les termes "minute dégradée", "seconde erronée" ou "seconde gravement erronée" dans la recommandation G-821.

A cette fin, un équipement selon l'invention est tel que défini dans la revendication 1.

De préférence, les moyens répartis comprennent des moyens pour synchroniser le fonctionnement des première et seconde stations, des moyens pour numéroter les groupes de trames concernés par les erreurs de transmission et les informations de contrôle correspondantes, des premiers moyens pour stocker temporairement les groupes de trames et les informations de contrôle, des moyens pour comparer bit à bit les premiers et seconds groupes de trames concernés par les erreurs de transmission, des seconds moyens pour stocker les résultats de la comparaison des groupes de trames ainsi que des informations relatives à des instants d'occurrence des erreurs de transmission, et des moyens pour traiter les résultats et informations contenus dans les seconds moyens pour stocker afin de produire lesdits informations statistiques et enregistrements.

L'invention sera mieux comprise à la lecture de la description suivante de plusieurs réalisations préférées de l'équipement de contrôle de qualité selon l'invention en référence aux dessins annexés correspondants dans lesquels :
- la Fig. 1 montre schématiquement la structure de l'équipement selon l'invention comprenant deux stations de contrôle localisées respectivement à deux extrémités de la liaison contrôlées et reliées entre elles à travers une liaison de service ;
- la Fig. 2 montre sous forme d'organigramme fonctionnel les traitements effectués dans une station primaire de l'équipement ;
- la Fig. 3 montre sous forme d'organigramme fonctionnel les traitements effectués dans une station secondaire de l'équipement ;
- la Fig. 4 montre les structures de différents paquets transmis entre la station primaire et la station secondaire à travers la liaison de service ;
- la Fig. 5 est un chronogramme relatif aux transmissions numériques à travers la liaison à contrôler et à travers la liaison de service ;
- la Fig. 6 est un bloc-diagramme détaillé de la station primaire et de la station secondaire ;
- la Fig. 7 montre un exemple d'occupation spatiale par des multitrames MIC d'une mémoire circulaire de stockage incluse dans une station de l'équipement selon l'invention.

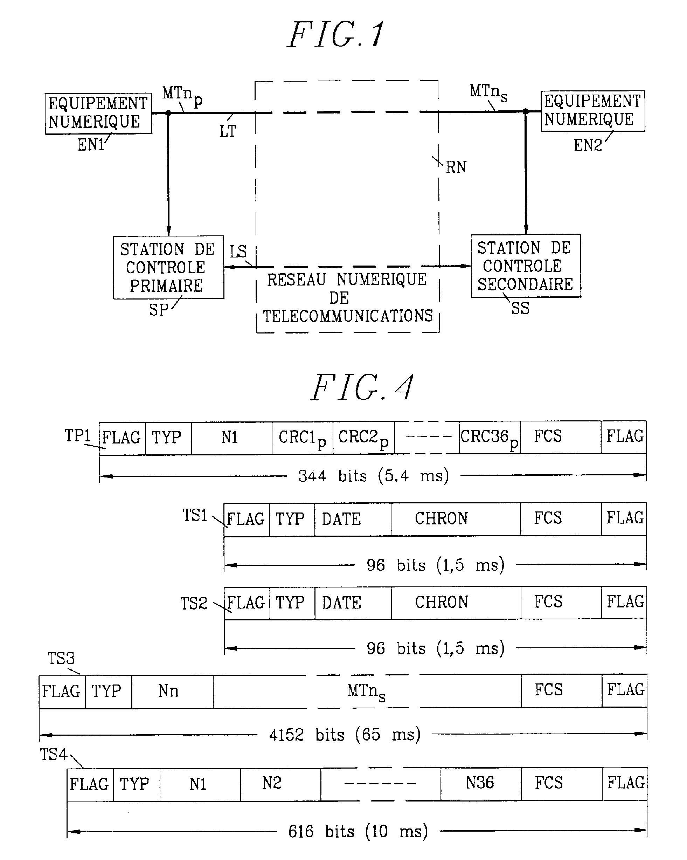

En référence à la Fig. 1, l'équipement selon l'invention est mis en oeuvre pour le contrôle de la qualité de transmission par exemple d'une liaison numérique LT convoyant des trames et multitrames MIC à 2 Mbit/s entre un premier équipement numérique EN1 et un second équipement numérique EN2.

L'équipement de contrôle de qualité de transmission selon l'invention comprend deux stations de contrôle, appelées respectivement station de contrôle primaire SP et station de contrôle secondaire SS, connectées respectivement aux extrémités de transmission et de réception de la liaison LT pour recevoir des multitrames MIC, MTn_{P}, transmises par la station primaire SP et des multitrames MIC correspondantes, MTn_{S}, reçues par la station secondaire SS. Les stations SP et SS sont reliées entre elles par une liaison de service LS typiquement à 64 kbit/s et supportant un protocole de type HDLC. Les liaisons LT et LS sont établies par exemple à travers un réseau numérique de télécommunications RN de type RNIS. La liaison LT est une liaison unidirectionnelle transportant 32 voies MIC de l'équipement EN1 vers l'équipement EN2. La liaison LS est de préférence une liaison bidirectionnelle par exemple de type symétrique à 64 kbit/s pour chaque sens de transmission. Selon une variante, la liaison de service LS est supportée par des voies MIC dédiées, convoyées par la liaison LT.

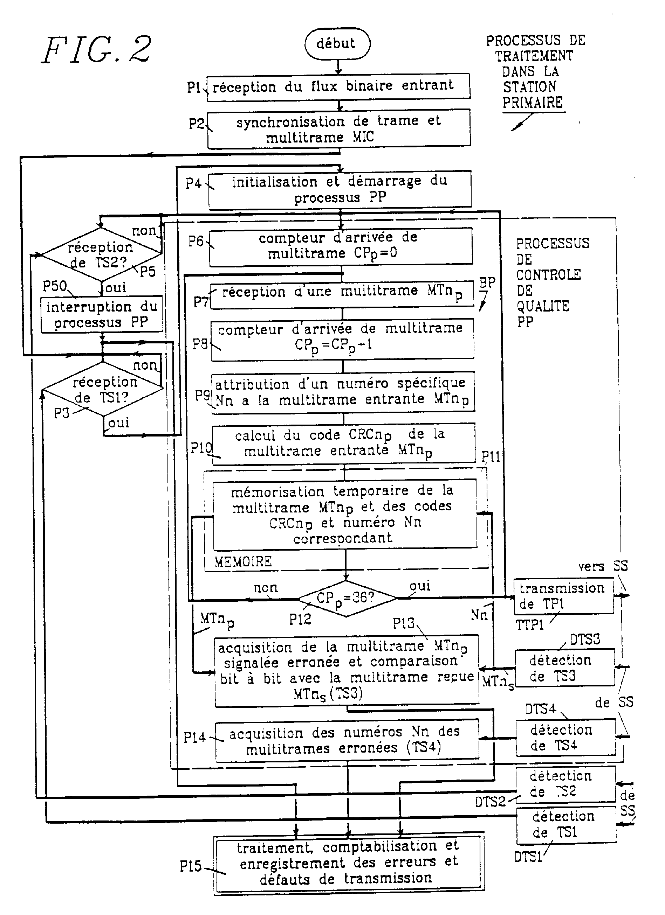

En référence aux Figs. 2 à 5 sont maintenant décrits les processus de traitement implantés dans les stations SP et SS ainsi que des échanges d'information effectués entre lesdites stations à travers la liaison de service LS.

Comme montré à la Fig. 2, un premier traitement (bloc P1) effectué dans la station primaire SP consiste à recevoir et traiter le flux binaire entrant à 2 Mbit/s. Le flux binaire entrant est reçu selon un code de ligne tel que le HDB3 et est transcodé en un code binaire classique.

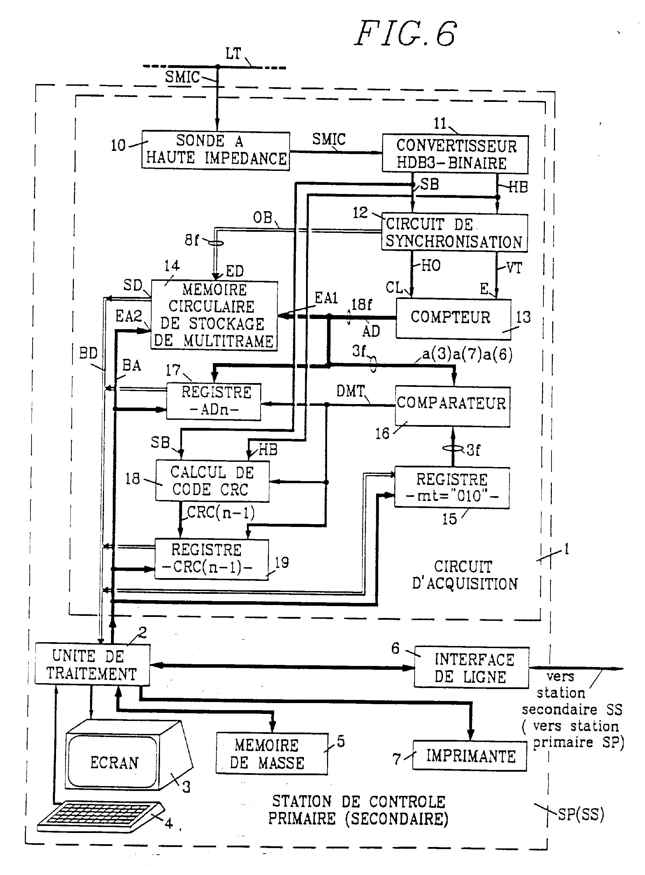

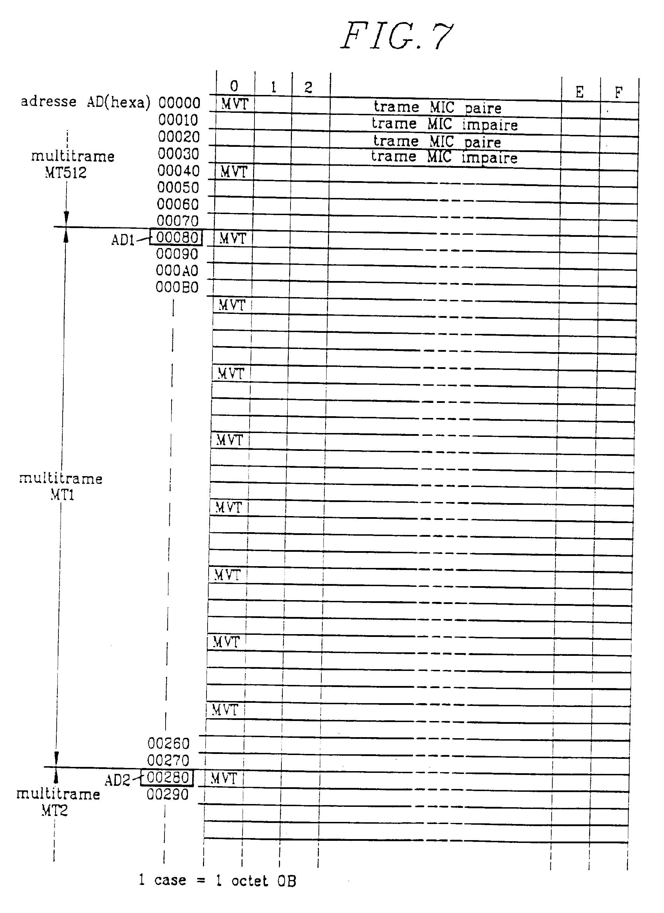

Une récupération de la synchronisation des trames et multitrames MIC portées par le flux binaire entrant est ensuite effectuée (bloc P2). La récupération de la synchronisation des trames MIC est de manière classique réalisée par un circuit de synchronisation inclus dans la station. La récupération de la synchronisation des multitrames MIC fait appel à un traitement par logiciel sur lequel plus de détails seront donnés ultérieurement en référence aux Figs. 6 et 7.

Lorsque la synchronisation est effective dans la station primaire SP, une boucle d'attente de synchronisation (bloc P3) est activée. Cette boucle P3 concerne la réception d'un paquet d'indication de synchronisation TS1 transmis par la station secondaire SS à travers la liaison de service LS. Lorsque le paquet TS1 est détecté (bloc DTS1) dans la station primaire SP, il indique à celle-ci que la station secondaire SS est synchronisée et est opérationnelle. La réception du paquet TS1 met fin à la boucle P3 et une phase d'initialisation et démarrage (bloc P4) d'un processus de contrôle de qualité PP est ensuite amorcée. Pendant la phase d'initialisation et démarrage P4, les valeurs contenues dans différents registres inclus dans les circuits de la station primaire SP sont initialisées.

Après la phase d'initialisation P4 le processus de contrôle de qualité PP et une boucle de veille de synchronisation (bloc P5) sont activés en parallèle.

La boucle de veille de synchronisation PS scrute la détection éventuelle (bloc DTS2) d'un paquet d'indication de perte de synchronisation TS2 transmis par la station secondaire SS pour indiquer une perte de synchronisation. Dans le cas où il est détecté une perte de synchronisation dans la station secondaire SS, le processus PP est suspendu (bloc P50) et la boucle d'attente de synchronisation P3 est réactivée en attente de la réception d'un autre paquet d'indication de synchronisation TS1 qui est transmis par la station secondaire SS dès récupération de la synchronisation. La détection de TS1 met fin à la boucle P3 et le processus de contrôle de qualité PP reprend postérieurement à une nouvelle phase d'initialisation et démarrage P4 du processus PP.

Le processus de contrôle de qualité PP comprend une boucle de traitement BP ayant pour fonction notamment la réception, la numérotation et la mémorisation temporaire de chacune des multitrames MIC, MTn_{P}, transmise dans la liaison LT par l'équipement numérique EN1. Une autre fonction de la boucle BP est de calculer des codes à redondance cyclique CRCn_{P} correspondant respectivement aux multitrames MTn_{P}.

Dans la boucle de traitement BP, initialement un compteur d'arrivée de multitrame CP_{P} est mis à zéro (bloc P6). Le compteur CP_{P} est incrémenté (bloc P8) consécutivement à chaque réception d'une multitrame MTnp (bloc P7). Un numéro d'identification spécifique Nn est attribué à la multitrame entrante (bloc P9) MTn_{P} et le code CRCn_{P} correspondant est calculé (bloc P10). La multitrame MTn_{P}, le numéro Nn et le code CRCn_{P} sont ensuite stockés (bloc P11) dans une mémoire. La boucle BP est exécutée en permanence de manière à traiter les multitrames MTn_{P} au fur et à mesure de leur transmission par l'équipement EN1. Les multitrames MTn_{P}, les codes CRCn_{P} et les numéros correspondants Nn sont considérés et traités ensuite par groupe par exemple de 36 entités.

Le compteur CP_{P} a pour fonction de produire une indication (bloc P12) à chaque fois qu'un groupe de 36 multitrames MTn_{P}, MT1_{P} à MT36_{P}, a été reçu et qu'un groupe correspondant de codes CRCn_{P}, CRC1_{P} à CRC36_{P}, est prêt pour être transmis vers la station secondaire SS au moyen d'un paquet TP1 (bloc TTP1).

Selon l'invention, la détection des erreurs de transmission est de préférence effectuée par la station secondaire SS localisée à l'extrémité de réception de la liaison LT et c'est à cette fin que sont transmis les codes CRCn_{P} afin que ceux-ci soient comparés à d'autres codes CRCn_{S} calculés localement dans la station secondaire et correspondant aux multitrames reçues MTn_{S}

Consécutivement à un contrôle par comparaison des groupes de codes CRCn_{P}, CRC1_{P} à CRC36_{P}, et CRCn_{S}, CRC1_{S} à CRC36_{S}, dans la station secondaire SS, trois cas de figure peuvent se présenter.

Selon un premier cas, les deux groupes de codes CRC1_{P} à CRC36_{P} SS et CRC1_{S} à CRC36_{S} qui sont comparés dans la station secondaire SS ont des valeurs identiques. La transmission est correcte et les 36 multitrames MTn_{S}, MT1_{S} à MT36_{S}, reçues par la station secondaire SS sont identiques à la capacité de détection des codes près de redondance cyclique aux 36 multitrames MTn_{P}, MT1_{P} à MT36_{P}, transmises par la station primaire SP.

Selon un second cas, les groupes de codes sont comparés et deux codes de même rang CRCn_{P} et CRCn_{S} ont des valeurs différentes. La multitrame reçue MTn_{S} et la multitrame transmise MTn_{P} auxquelles correspondent respectivement les codes CRCn_{S} et CRCn_{P} sont différentes à la suite d'une erreur de transmission. Un paquet TS3 contenant notamment la multitrame erronée MTn_{S} ainsi que le numéro correspondant Nn est transmis par la station secondaire SS vers la station primaire SP. Le paquet TS3 est détecté (bloc DTS3) dans la station primaire SP. Le numéro Nn contenu dans le paquet TS3 adresse la multitrame MTnp dans la mémoire P11. Les multitrames MTn_{P} et Mpn_{S} sont comparées bit à bit (bloc P13). Les bits erronés sont détectés. L'erreur de transmission correspondante est ensuite enregistrée (bloc P15) sous la forme d'informations dans lesquelles apparaissent la date et l'instant chronométrique de l'erreur, le numéro Nn de la multitrame MTn_{S} erronée et les numéros dans la multitrame MTn_{S} des bits concernés.

Selon un troisième cas, les deux groupes de codes sont comparés et plusieurs codes CRCM_{P} et CRCm_{S}, CRCp_{P} et CRCp_{S}, CRCq_{P} et CRCq_{S}... ont des valeurs différentes. Les multitrames reçues correspondantes MTm_{S}, MTp_{S}, MTq_{S}... sont erronées et diffèrent des multitrames transmises MTm_{P}, MTp_{P}, MTq_{P}.... La liaison LT est alors fortement perturbée et il n'est pas possible de transmettre vers la station secondaire SS immédiatement toutes les multitrames erronées, compte-tenu du débit de la liaison de service LS. Un paquet TS4 contenant notamment les numéros Nm, Np, Nq... correspondant aux multitrames erronées MTm_{S}, MTp_{S}, MTq_{S}... est transmis par la station secondaire SS vers la station primaire SP. Le paquet TS4 est détecté dans la station primaire SP (bloc DTS4). Selon une première variante de réalisation, les numéros Nn, soit Nm, Np, Nq..., contenus dans le paquet TS4 sont lus (bloc P14) et sont immédiatement enregistrés (bloc P15) sous la forme d'informations spécifiant également la date et l'instant chronométrique de l'erreur de transmission et aucun autre traitement n'est effectué par la suite sur les multitrames afin de détecter les bits affectés par l'erreur de transmission.

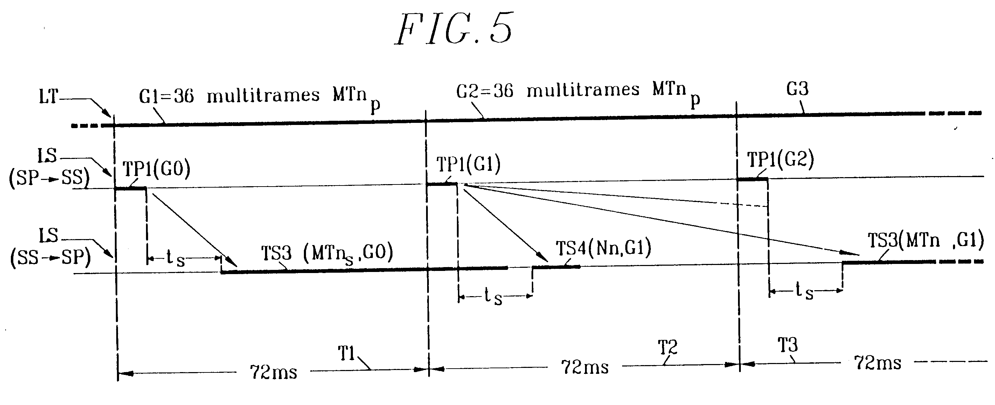

Selon une seconde variante de réalisation, les multitrames MTm_{P}, MTp_{P}, MTq_{P}... désignées par les numéros Nm, Np, Nq... sont récupérées et sont sauvegardées en attente de la réception des multitrames erronées MTm_{S}, MTp_{S}, MTq_{S}... dont la transmission par la station secondaire SS est effectuée au fur et à mesure en fonction de la disponibilité de la liaison de service LS. Lorsque les différentes multitrames erronées MTm_{S}, MTp_{S}, MTq_{S}... sont présentes dans la station primaire SP, une comparaison bit par bit est effectuée avec les multitrames MTm_{P}, MTp_{P}, MTq_{P}... et les bits affectés par l'erreur de transmission sont détectés. Le résultat du traitement est ensuite enregistré (bloc P15). Cette seconde variante de réalisation est considérée ultérieurement en référence à la Fig. 5.

Par ailleurs, les évènements tels que perte de synchronisation et interruption du processus PP (bloc P50) sont également enregistrés (bloc P15) et la date, l'instant chronométrique etla durée de l'évènement sont précisés.

Des traitements statistiques sont effectués sur l'ensemble des informations d'erreurs obtenues (bloc P15) de manière à fournir les paramètres de qualité selon le CCITT.

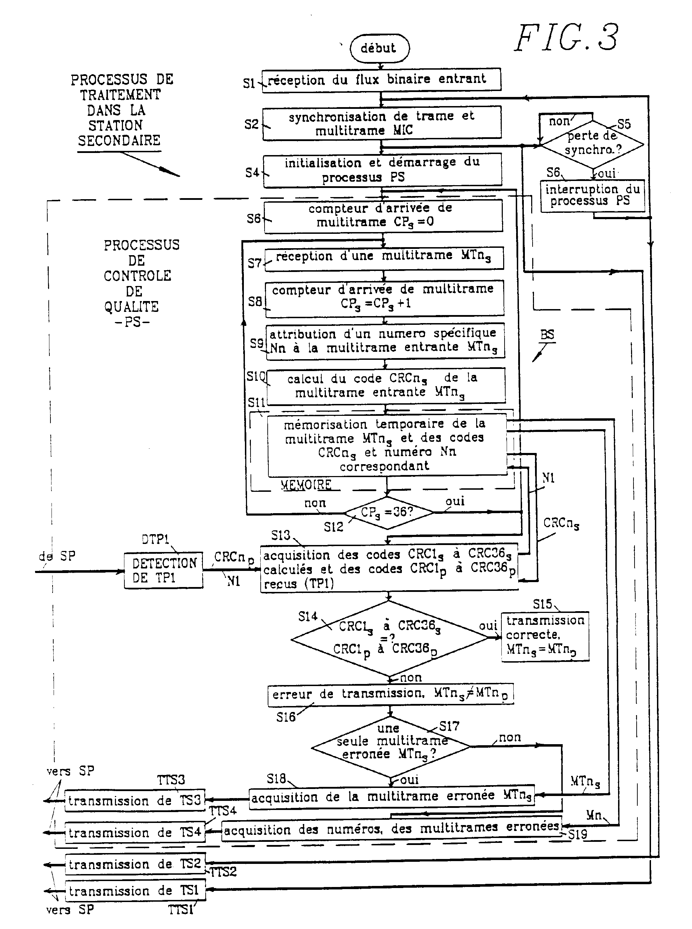

Comme montré à la Fig. 3, la station secondaire SS réalise sur les multitrames MTn_{S} des traitements S1, S2, S4 et S6 à S12 analogues respectivement aux traitements P1, P2, P4 et P6 à P12 réalisés dans la station primaire SP (Fig. 2) sur les multitrames MTn_{P}.

Un compteur CP_{S} (blocs S6, S8 et S12) correspond au compteur CP_{S} de la Fig. 2 (blocs P6, P8 et P12). La station secondaire SS reçoit des multitrames MTn_{S} à travers la liaison LT. Les multitrames MTn_{S} sont traitées, de même que les multitrames MTn_{P}, par groupe de 36 multitrames par une boucle de traitement BS analogue à la boucle de traitement BP. Un code CRCn_{S} est calculé (bloc S10) pour chaque multitrame entrante MTn_{S} et est stocké en mémoire (bloc S11) parallèlement avec la multitrame MTn_{S} et le numéro d'identification Nn correspondant (bloc S9).

Après la synchronisation de trame et multitrame MIC (bloc S2), un paquet d'indication de synchronisation TS1 est transmis vers la station primaire SP (bloc TTS1) et une boucle de veille de synchronisation (bloc S5) est activée et fonctionne parallèlement au processus de contrôle de qualité PS mis en oeuvre dans la station secondaire SS. La boucle S5 a pour fonction de détecter toute perte de synchronisation dans la station secondaire SS. Lorsqu'une perte de synchronisation intervient, le processus de contrôle de qualité PS de la station secondaire SS est interrompu (bloc S6), un paquet d'indication de perte de synchronisation TS2 est transmis vers la station primaire SP (bloc TTS2) et la phase de synchronisation (bloc S2) est réactivée.

Lorsque le compteur CP_{S} atteint la valeur 36, un groupe de 36 multitrames MTn_{S}, MT1_{S} à MT36_{S}, a été reçu et les codes correspondants CRCn_{S}, CRC1_{S} à CRC36_{S}, sont disponibles. Le paquet TP1 transmis par la station primaire SP est détecté (bloc DTP1) et les codes CRCn_{P}, CRC1_{P} à CRC36_{P}, sont lus (bloc S13) dans le paquet TP1 ainsi que les codes CRCn_{S}, CRC1_{S} à CRC36_{S}, qui sont adressés dans la mémoire S11 à partir d'un numéro d'identification Nn, N1, lu dans le paquet TP1. Le numéro d'identificaion N1 est utilisé pour adresser une cellule de la mémoire S11 contenant le premier code CRC1_{S} correspondant au code CRC1ₚ. Les adresses des cellules contenant les codes suivants CRC2_{S} à CRC36_{S} sont déduites par incrémentations successives du numéro N1. Les groupes de codes CRCn_{P}, CRC1_{P} à CRC36_{P}, et CRCn_{S}, CRC1_{S} à CRC36_{S}, sont comparés (bloc S14).

Dans le cas d'une égalité entre les groupes de codes CRCn_{P} et CRCn_{S}, la transmission des multitrames MTn_{P} s'est effectuée sans erreur et les multitrames reçues MTn_{S} sont correctes, MTn=MTn_{P} (bloc S15). Dans le cas contraire, une erreur de transmission est intervenue et l'une ou plusieurs des multitrames MTn_{S} est erronée, MTn_{S}≠MTn_{P}, (bloc S16).

Lorsque l'erreur de transmission ne concerne qu'une seule multitrame MTn_{S} (bloc S17), celle-ci est lue (bloc S18) dans la mémoire S11 et est transmise immédiatement vers la station primaire SP au moyen du paquet TS3 (bloc TTS3). Lorsque l'erreur de transmission concerne plusieurs multitrames MTns (bloc S17), les numéros Nn des multitrames erronées MTn_{S} sont lus (bloc S19) dans la mémoire S11 et sont transmis vers la station primaire SP au moyen du paquet TS4 (bloc TTS4).

En référence à la Fig. 4, les différents paquets TP1 et TS1 à TS4 sont de type HDLC et comprennent des fanions "FLAG" pour délimiter les débuts et fins des paquets. Un fanion FLAG est composé d'un octet "01111110". Un bloc de contrôle FCS (frame control sequence) de deux octets est également prévu dans chacun des paquets. Les deux octets correspondant au niveau 2 du protocole ne sont pas ici considérés et représentés, puisque n'intervenant pas directement dans l'objet de l'invention.

Le paquet de transmission de code CRC, TP1, comprend un octet type TYP="00000110"=06, un groupe de 36 codes CRCn_{P}, CRC1_{P} à CRC36_{P} correspondant au dernier groupe de 36 multitrames MTn_{P}, MT1_{P} à MT36_{P}, traité dans la station primaire SP, et un numéro N1 correspondant à la première multitrame MT1_{P} du groupe. Les numéros N1 et codes CRCn_{P} ont respectivement des longueurs de deux et un octets. Le paquet TP1 a une longueur de 43 octets, soit 344 bits, et est transmis à travers la liaison de service LS en 5,4 ms.

Le paquet d'indication de synchronisation TS1 comprend un octet type TYP="00000010"=02, deux octets DATE correspondant à la date de l'événement et indiquant le mois et le jour, et cinq octets CHRON correspondant à l'instant chronométrique de l'événement et indiquant l'heure, les minutes, les secondes et les millièmes de seconde. Le paquet TS1 a une longueur de 12 octets, soit 96 bits, et est transmis à travers la liaison de service LS en 1,5 ms.

Le paquet d'indication de perte de synchronisation TS2 comprend un octet type TYP="00000100"=04, et deux octets DATE et cinq octets CHRON de manière analogue au paquet TS1.

Le paquet de transmission de multitrame erronée TS3 comprend un octet type TYP="00001000"=08, deux octets correspondant au numéro Nn de la multitrame erronée MTn_{S} et un champ de 512 octets contenant la multitrame erronée MTn_{S}. Le paquet TS3 a une longueur totale de 519 octets, soit 4152 bits, et est transmis à travers la liaison de service LS en 65 ms.

Le paquet de transmission de numéros de multitrames erronées TS4 comprend un octet type TYP="00001010"=10 et un champ de 36x2 octets pour la transmission des numéros Nn, N1 à N36, des multitrames MTn_{S} erronées. Le paquet TS4 a une longueur totale de 77 octets, soit 616 bits, et est transmis à travers la liaison de service LS en 10 ms.

En référence à la Fig. 5, la transmission d'un groupe G de 36 multitrames MTnₚ à travers la liaison LT est effectuée en 72 ms, sachant qu'une multitrame MIC, MTnₚ, est constituée de 512 octets qui sont transmis à 2 Mbit/s dans la liaison LT. La transmission de trois groupes de multitrames G1, G2 et G3 est montrée à la Fig. 5. En début de première, seconde et troisième périodes de temps, T1, T2 et T3, correspondant à la transmission des groupes G1, G2 et G3, sont transmis dans la liaison LS (sens SP→ SS) des paquets TP1(G0), TP1(G1) et TP1(G2), respectivement. Les paquets TP1(G0), TP1(G1) et TP1(G2) contiennent les groupes de codes CRCn_{P} correspondant respectivement à un groupe G0 transmis antérieurement au groupe C1, le groupe C1 et le groupe G2.

Pendant la période T1, il est considéré à titre d'exemple que l'une des multitrames MTn_{P} du groupe G0 transmis précédemment est détectée erronée par la station secondaire SS. Un intervalle de temps t_{S} est nécessaire à la station secondaire SS pour traiter les codes CRCn. A la fin de cet intervalle de temps t_{S}, la station secondaire SS transmet vers la station primaire SP un paquet TS3 contenant la multitrame erronée MTn_{S} du groupe G0.

Pendant la période T2, plusieurs multitrames MTn_{S} du groupe G1 sont détectées erronées dans la station secondaire SS. Après l'intervalle de temps t_{S} nécessaire au traitement des codes CRCn, la station secondaire SS transmet vers la station primaire SP un paquet TS4 contenant les numéros Nn des multitrames erronées MTn_{S} du groupe G1. Le paquet TS4 est reçu par la station primaire SP et les multitrames correspondantes MTn_{P} sont sauvegardées.

Il est considéré que les multitrames du groupe G2 sont correctement reçues MTn_{S}=MTn_{P} dans la station secondaire SS. Pendant la période T3, un intervalle temporel est disponible selon le sens SS→ SP de la liaison LS et la station secondaire SS utilise cet intervalle libre pour transmettre un paquet TS3 vers la station primaire SS. Le paquet TS3 contient une première multitrame erronée MTn_{S} du groupe G1 reçu pendant la période T2. Ultérieurement, la station secondaire SS continue à utiliser chaque intervalle temporel libre pendant les périodes T pour transmettre progressivement vers la station primaire SP toutes les multitrames erronées MTn_{S} du groupe G1. Lorsque toutes les multitrames erronées MTn_{S} ont été reçues par la station primaire SP, elles sont comparées bit à bit avec les multitrames correspondantes MTn_{P} afin de détecter au niveau du bit les erreurs de transmission et de procéder aux enregistrements correspondants.

En référence à la Fig. 6, la station de contrôle primaire SP et la station de contrôle secondaire SS sont analogues et comprennent essentiellement un circuit d'acquisition 1, une unité de traitement 2, des moyens de dialogue homme-machine sous la forme d'un écran 3 et d'un clavier 4, une mémoire de masse 5, une interface de ligne 6, et une imprimante 7.

Le circuit d'acquisition 1 comprend une sonde à haute impédance 10, un convertisseur HDB3-BINAIRE 11, un circuit de synchronisation 12, un compteur 13, une mémoire circulaire de stockage de multitrame 14, un premier registre 15, un comparateur 16, un second registre 17, un circuit de calcul de code à redondance cyclique (CRC) 18, et un troisième registre 19.

La sonde 10 est reliée en entrée à la liaison LT et reçoit un signal de transmission MIC en code de ligne HDB3. La sonde 10 a une entrée à haute impédance et est conçue pour ne pas perturber le signal SMIC convoyé par la liaison LT. La station SP(SS) fonctionne en mode "espion". La sonde 10 délivre en sortie le signal SMIC amplifié à un niveau adéquat. Le signal SMIC délivré par la sonde 10 est fourni au convertisseur 11.

Le convertisseur 11 assure la récupération d'un signal d'horloge de rythme de bit HB contenu dans le signal MIC ainsi que le transcodage du signal SMIC en code HDB3 en un signal SB en code binaire. Les signaux SB et HB sont appliqués à des entrées correspondantes du circuit de synchronisation 12 et du circuit de calcul de code CRC, 18.

Le circuit de synchronisation 12 est un circuit de type classique et comprend des moyens de comparaison, de comptage et de conversion série-parallèle. Le circuit 12 détecte chacun des mots de verrouillage de trame (MVT) contenu dans le signal SB et délivre un signal d'indication de synchronisation VT="1" lorsque la synchronisation de trame est effective. Par ailleurs, le circuit 12 réalise une conversion série-parallèle du signal SB et délivre des octets de trame OB et un signal d'horloge de rythme d'octet HO. Les signaux VT et HO sont fournis respectivement à des entrées E et CL du compteur 13. Les octets OB sont appliqués à des entrées parallèles de données ED de la mémoire circulaire de stockage 14.

Le compteur 13 est un compteur binaire modulo 2¹⁸. Le signal VT à l'état "0" initialise le compteur 13 à la valeur 0 et le maintient bloqué à cette valeur. Le signal VT à l'état "1" libère le compteur 13 et son contenu est alors incrémenté au rythme du signal HO appliqué à l'entrée d'horloge CL. Le compteur délivre en sortie des adresses AD qui sont appliquées à des premières entrées d'adresses EA1 de la mémoire circulaire de stockage 14 et à des entrées de données du registre 17.

La mémoire circulaire 14 est une mémoire à double accès ayant des sorties parallèles de données SD et des secondes entrées d'adresses EA2 reliées respectivement à un bus de données BD et à un bus d'adresses BA de l'unité de traitement 2. La taille de la mémoire circulaire est typiquement de 256 Ko et permet de stocker 512 multitrames MIC, MTn, de 512 octets chacune. La mémoire 14 est une mémoire circulaire c'est-à-dire qu'elle est gérée de telle manière que les multitrames entrantes "écrasent" les multitrames les plus anciennes, chronologiquement, et sont mémorisées dans les cellules de données correspondantes de la mémoire. L'accès de l'unité de traitement 2 à la mémoire 14 est de type DMA et autorise des sauvegardes rapides de multitrames dans la mémoire de masse 5. La taille typique, 256 Ko, de la mémoire 14 peut s'avérer insuffisante dans le cas notamment où la liaison de service LS est établie à travers plusieurs commutateurs, en nombre indéterminé, d'un réseau de télécommunications et devra éventuellement être accrue de manière à pallier à des variations de temps de transit des signaux.

La configuration d'occupation spatiale de l'espace de la mémoire 14 par les multitrames MTn est temporellement stable du fait que le compteur 13 est maintenu bloqué jusqu'au passage à l'état "1" du signal VT, passage qui s'effectue simultanément à la transmission d'un mot de verrouillage de trame OB=MVT vers les entrées de données ED de la mémoire 14, et du fait que la taille de la mémoire 14 est un multiple entier de la taille d'une multitrame. Un exemple de configuration d'occupation de la mémoire 14 est montré à la Fig. 7.

En référence également à la Fig. 7, une première multitrame MT1 mémorisée dans la mémoire 14 occupe par exemple les cellules de données de l'adresse AD=00080 à AD=00270 (en hexadécimal), une seconde multitrame MT2 occupe les cellules de données de l'adresse AD=00280 à 00470,... une 511ème multitrame MT511 occupe les cellules de données de l'adresse AD=3FC80 à AD=3FE70, et une 512ème multitrame MT512 occupe les cellules de données de l'adresse AD=3FE80 à AD=00070.

La localisation de la première multitrame MT1 dans l'espace de la mémoire 14 est réalisée par traitement logiciel. L'unité de traitement 2 procède à la lecture des 512 premiers octets contenus dans la mémoire 14 (de AD=00000 à AD=001FF) et les traite de manière à détecter un mot de verrouillage de multitrame et à déduire l'adresse de début AD1=00080 de la première multitrame MT1 à partir de l'emplacement détecté dudit mot de verrouillage de multitrame. L'adresse AD1 est mémorisée dans un fichier de la mémoire de masse à un emplacement adressé par le numéro de multitrame Nn=N1. La détection de la valeur de l'adresse AD1=00080 est une première étape de la synchronisation de multitrame. Une seconde étape de la synchronisation de multitrame consiste à affecter à un mot de trois bits mt les valeurs de trois bits de l'adresse AD1 relatifs au comptage des multitrames dans la mémoire 14 et à écrire le mot mt dans le registre 15. L'unité de traitement 2 a accès au registre 15 à travers les bus d'adresses et de données BA et BD.

Soit l'adresse AD1="00a(17)a(16)... a(1)a(0)"=00080ₕₑₓₐ,a(0) à a(17) étant les 18 bits, du LSB au MSB, de l'adresse AD1, le mot mt est constitué par les bits a(6), a(7) et a(8), mt="a(8)a(7)a(6)"="010". Le mot m(t)="010" est inclus dans toutes les adresses de début de multitrame AD1=00080 à AD512=3FE80, au niveau des portions binaires a(8)a(7)a(6) desdites adresses. Pour détecter les adresses de début de multitrame ADn, il suffit donc de détecter les adresses AD telles que la portion a(8)a(7)a(6) des adresses AD soit égale au mot mt="010".

Le comparateur 16 a pour fonction de détecter les adresses de début de multitrame ADn. Le comparateur 16 reçoit le mot mt délivré par le registre 15 et la portion binaire a(8)a(7)a(6) de l'adresse AD délivrée par le compteur 13, respectivement à des premières et secondes entrées. Un signal DMT délivré par le comparateur 16 indique à l'état "1" que le début d'une multitrame MTn est en cours de réception dans le circuit d'acquisition 1. Le signal DMT est appliqué à des entrées correspondantes du registre 17, du circuit de calcul de code CRC,18, et du registre 19.

Dans le registre 17, le signal DMT="1" commande le chargement de l'adresse de début ADn de la multitrame MTn en cours de réception. L'unité de traitement 2 accède au registre 17 à travers les bus BA et BD et l'adresse ADn lue dans ledit registre est transférée vers un fichier correspondant dans la mémoire de masse 5.

Dans le circuit de calcul de code CRC,18, le signal DMT="1" indique le début de la multitrame MTn en cours de réception et commande le démarrage du calcul du code CRCn. Le code CRCn est calculé à partir du signal SB et du signal d'horloge de rythme de bit HB. De manière classique, le circuit 18 comprend des registres à décalage et des portes OU-exclusif. Ce type de circuit est connu dans l'état de la technique et ne sera pas décrit ici. Le signal DMT="1" commande également le transfert dans le registre 19 du code CRC(n-1) précédemment calculé et relatif à la multitrame MT(n-1).

Le registre 19 est relié aux bus d'adresses et de données BA et BD. Le signal DMT est appliqué à une entrée de commande de chargement et commande à l'état "1" le chargement dans le registre 19 du code CRC(n-1) transmis par le circuit de calcul de code CRC,18. Le code contenu dans le registre 19 est ensuite lu par l'unité 2 et transféré vers la mémoire de masse 5.

L'unité de traitement 2 est par exemple constituée d'une carte à microprocesseur de 16 bits. De préférence, l'unité 2, l'écran 3, le clavier 4, la mémoire de masse 5 et l'interface de ligne 6 sont intégrés dans un micro-ordinateur du commerce. La mémoire de masse 5 est par exemple constituée par un disque dur du micro-ordinateur. L'interface de ligne 6 est enfichée dans un connecteur intérieur du micro-ordinateur et relie l'unité de traitement 2 à la liaison de service LS. L'imprimante 7 est prévue pour produire un enregistrement sur papier des résultats du contrôle de qualité de la liaison de transmission LT.

## Revendications

1. Equipement pour contrôler la qualité d'une liaison de transmission numérique (LT) en présence de trafic réel, comprenant
des première et seconde stations de contrôle (SP, SS) respectivement reliées à des première et seconde extrémités (EN1, EN2) de la liaison,
la première station (SP) comprenant des moyens pour calculer des premières informations de contrôle (CRCn_{P}) relatives à des groupes de trames (MTn_{P}) transmis depuis la première extrémité (EN1), et des moyens pour transmettre les premières informations de contrôle (CRCn_{P}) vers ladite seconde station (SS) à travers une liaison de service (LS), et
la seconde station (SS) comprenant des moyens pour calculer des secondes informations de contrôle (CRCn_{S}) relatives à des groupes de trames (MTn_{S}) reçus à la seconde extrémité (EN2) , et des moyens pour détecter des erreurs de transmission consécutivement à des comparaisons entre lesdites secondes informations de contrôle (CRCn_{S}) et lesdites premières informations de contrôle reçues de ladite première station (SP),
caractérisé en ce que
ladite seconde station (SS) comprend, en outre, des moyens pour retransmettre les groupes de trames (MTn_{S}) reçus concernés par les erreurs de transmission vers ladite première station (SP) à travers la liaison de service (LS), et
ledit équipement comprend des moyens répartis entre lesdites première et seconde stations (SP, SS) pour comparer bit à bit les groupes de trames reçus (MTn_{S}) avec les groupes de trames transmis correspondants concernés par les erreurs de transmission, et produire des informations statistiques et des enregistrements relatifs auxdites erreurs.

2. Equipement conforme à la revendication 1, caractérisé en ce que les transmissions entre les première et seconde stations (SP, SS) à travers la liaison de service (LS) sont effectuées selon un protocole de type HDLC.

3. Equipement conforme à la revendication 1 ou 2, caractérisé en ce que la liaison de service (LS) est convoyée partiellement ou entièrement par un réseau numérique de télécommunications (RN).

4. Equipement conforme à l'une quelconque des revendications 1 à 3, caractérisé en ce que la liaison de service (LS) est convoyée partiellement ou entièrement par des voies de données dédiées (voies MIC) de la liaison de transmission numérique à contrôler (LT).

5. Equipement conforme à l'une quelconque des revendications 1 à 4, caractérisé en ce que les informations de contrôle (CRCn_{P}, CRCn_{S}) calculées par les première et seconde stations sont du type code à redondance cyclique (CRC).

6. Equipement conforme à l'une quelconque des revendications 1 à 5, caractérisé en ce que lesdits moyens répartis comprennent des moyens (P2, P5, P3, S2, S5 ; TS1, TS2) pour synchroniser le fonctionnement des première et seconde stations (SP, SS), des moyens (P9, S9) pour numéroter (Nn) les groupes de trames (MTn_{P}, MTn_{S}) concernés par les erreurs de transmission, des seconds moyens (P15) pour stocker les résultats de la comparaison des groupes de trames ainsi que des informations relatives à des instants d'occurrence des erreurs de transmission (P15), et des moyens (P15) pour traîter les résultats et informations contenus dans les seconds moyens pour stocker afin de produire lesdits informations statistiques et enregistrements.

7. Equipement conforme à l'une quelconque des revendications 1 à 6, caractérisé en ce que lesdits moyens répartis dans chacune des stations (SP, SS) sont supportés par un circuit d'acquisition (1) relié en mode espion à la liaison de transmission numérique (LT) et des moyens informatiques de traitement (2, 4 à 7) tels qu'un micro-ordinateur.

8. Equipement conforme à l'une quelconque des revendications 1 à 7, caractérisé en ce que lesdits groupes de trames comprennent des trames et multitrames (MTn) de type MIC.

## Patentansprüche

1. Einrichtung zur Kontrolle der Qualität einer Verbindung zur digitalen Übertragung (LT) bei Vorhandensein von realem Verkehr, bestehend aus ersten und zweiten Kontrollstationen (SP, SS), die jeweils an das erste und zweite Ende (EN1, EN2) der Verbindung angeschlossen sind, wobei die erste Station (SP) Mittel zur Berechnung erster Kontrollinformationen (CRCnₚ) in bezug auf Rahmengruppen (MTnₚ), die vom ersten Ende (EN1) übertragen werden, und Mittel zur Übertragung der ersten Kontrollinformationen (CRCnₚ) zur genannten zweiten Station (SS) über eine Serviceverbindung (LS) aufweist, und die zweite Station (SS) Mittel zur Berechnung der zweiten Kontrollinformationen (CRCn_{S}) in bezug auf Rahmengruppen (MTn_{S}), die am zweiten Ende (EN2) empfangen werden, und Mittel zur Feststellung von Übertragungsfehlern im Anschluß an Vergleiche zwischen den genannten zweiten Kontrollinformationen (CRCn_{S}) und den genannten ersten Kontrollinformationen, die von der genannten ersten Station (SP) empfangen werden, aufweist, dadurch gekennzeichnet, daß die genannte zweite Station (SS) unter anderem Mittel zur Rückübertragung der Rahmengruppen (MTn_{S}) aufweist, die bezüglich der Fehler der Übertragung an die genannte erste Station (SP) über die Serviceverbindung (LS) empfangen wurden, und daß die genannte Einrichtung Mittel aufweist, die unter den genannten ersten und zweiten Stationen (SP, SS) verteilt sind, um die empfangenen Rahmengruppen (MTn_{S}) mit den entsprechenden übertragenen Rahmengruppen, die von den Übertragungsfehlern betroffen sind, bitweise zu vergleichen und statistische Informationen und Aufzeichnungen in bezug auf die genannten Fehlern zu erzeugen.

2. Einrichtung gemäß Anspruch 1, dadurch gekennzeichnet, daß die Übertragungen zwischen den ersten und zweiten Stationen (SP, SS) über die Serviceverbindung (LS) nach einem Protokoll vom Typ HDLC erfolgen.

3. Einrichtung gemäß Anspruch 1 oder 2, dadurch gekennzeichnet, daß die Serviceverbindung (LS) teilweise oder ganz über ein digitales Telekommunikationsnetz (RN) erfolgt.

4. Einrichtung gemäß einem der Ansprüche 1 bis 3, dadurch gekennzeichnet, daß die Serviceverbindung (LS) teilweise oder ganz über gewidmete Datenwege (MIC-Wege) der Verbindung der zu kontrollierenden digitalen Übertragung (LT) erfolgt.

5. Einrichtung gemäß einem der Ansprüche 1 bis 4, dadurch gekennzeichnet, daß die von den ersten und zweiten Stationen berechneten Kontrollinformationen (CRCnₚ, CRCn_{S}) vom Typ mit zyklischem Redundanzcode (CRC) sind.

6. Einrichtung gemäß einem der Ansprüche 1 bis 5, dadurch gekennzeichnet, daß die genannten verteilten Mittel Mittel (P2, P5, P3, S2, S5; TS1, TS2) aufweisen, um die Funktion der ersten und zweiten Stationen (SP, SS) zu synchronisieren, ferner Mittel (P9, S9) aufweisen, um die von den Übertragungsfehlern betroffenen Rahmengruppen (MTnₚ, MTn_{S}) zu numerieren (Nn), zweite Mittel (P15) zum Speichern der Ergebnisse des Vergleichs der Rahmengruppen sowie der Informationen in bezug auf die Zeitpunkte des Auftretens der Übertragungsfehler (P15) und Mittel (P15) zur Verarbeitung der Ergebnisse und Informationen, die in den zweiten Speichermitteln enthalten sind, um die genannten statistischen Informationen und Aufzeichnungen zu erzeugen.

7. Einrichtung gemäß einem der Ansprüche 1 bis 6, dadurch gekennzeichnet, daß die genannten, in jeder der Stationen (SP, SS) verteilten Mittel durch eine Erfassungsschaltung (1) unterstützt werden, die in der Betriebsart "Überwachen" mit der Verbindung zur digitalen Übertragung (LT) und mit Informationsverarbeitungsmitteln (2, 4 bis 7), wie zum Beispiel einem Mikrocomputer, verbunden sind.

8. Einrichtung gemäß einem der Ansprüche 1 bis 7, dadurch gekennzeichnet, daß die genannten Rahmengruppen Rahmen und Mehrfachrahmen (MTn) vom Typ MIC aufweisen.

## Claims

1. Equipment for checking the quality of a digital transmission link (LT) in the presence of real traffic, comprising
first and second checking stations (SP,SS) respectively connected to first and second ends (EN1,EN2) of the link,
the first station (SP) comprising means for calculating first check information (CRCnₚ) relating to groups of frames (MTnₚ) transmitted from the first extremity (EN1), and means for transmitting the first check information (CRCnₚ) to the said second station (SS) through the service link (LS), and
the second station (SS) comprising means for calculating second check information (CRCn_{S}) relating to groups of frames (MTn_{S}) received to the second end (EN2), and means for detecting transmission errors consecutively to comparisons between said check information (CRCn_{S}) and said first check informations received from said first station (SP),
characterized in that
said second station (SS) further comprises means for transmitting again the received group of frames (MTn_{S}) affected by the transmission errors to said first station (SP) through the service link (LS), and
said equipment comprises means distributed between said first and second stations (SP, SS) for comparing bit to bit the received groups of frames (MTn_{S}) with the corresponding transmitted groups of frames affected by transmission errors, and deriving statistical information and recordings relating to said errors.

2. Equipment according to claim 1, characterized in that the transmissions between the first and second stations (SP,SS) through the service link (LS) are carried out according to a HDLC-type protocol.

3. Equipment according to claim 1 or 2, characterized in that the service link (LS) is partially or entirely carried by a digital telecommunications network (RN).

4. Equipment according to any one of claims 1 to 3, characterized in that the service link (LS) is partially or entirely carried by dedicated data channels (MIC channels) of the digital transmission link to be checked (LT).

5. Equipment according to any one of claims 1 to 4, characterized in that the check informations (CRCnₚ, CRCn_{S}) calculated by the first and second stations are of the cyclic redundancy code type (CRC).

6. Equipment according to any one of claims 1 to 5, characterized in that the said distributed means comprise means (P2, P5, P3, S2, S5; TS1, TS2) for synchronizing the operation of the first and second stations (SP, SS), means (P9, S9) for numbering (Nn) the groups of frames (MTnₚ, MTn_{S}) affected by the transmission errors, second means (P15) for storing the results of the comparison groups of frames as well as information relating to instants of occurrence of the transmission errors (P15), and means (P15) for processing the results and information contained in the second storing means thereby deriving said statistical information and recordings.

7. Equipment according to any one of claims 1 to 6, characterized in that said means distributed in each of the stations (SP, SS) are supported by an acquisition circuit (1) connected in spy mode to the digital transmission link (LT) and data processing means (2, 4 to 7) such as a microcomputer.

8. Equipment according to any one of claims 1 to 7, characterized in that the said groups of frames comprise PCM-type frames and multiframes (MTn).
